(19) Europäisches Patentamt
European Patent Office
Office européen des brevets

(11) **EP 0 802 588 B1**

(12) **EUROPÄISCHE PATENTSCHRIFT**

(45) Veröffentlichungstag und Bekanntmachung des Hinweises auf die Patenterteilung:
**13.06.2001   Patentblatt 2001/24**

(51) Int Cl.⁷: **H01R 39/54**, H02K 13/14, H01R 43/14

(21) Anmeldenummer: **97105907.6**

(22) Anmeldetag: **10.04.1997**

(54) **Verfahren zum Betrieb eines Gleichstrommotors**

Method for DC Motor operation

Procédé d'exploitation d'un moteur à courant continu

(84) Benannte Vertragsstaaten:
**AT BE CH DE FR GB IT LI NL**

(30) Priorität: **13.04.1996  DE 19614673**

(43) Veröffentlichungstag der Anmeldung:
**22.10.1997   Patentblatt 1997/43**

(73) Patentinhaber: **HONEYWELL AG**
**D-63067 Offenbach am Main (DE)**

(72) Erfinder: **Volker, Ebert, Dipl.-Ing. (FH)**
**70771 Leinfelden (DE)**

(74) Vertreter: **Sturm, Christoph et al**
**Honeywell Holding AG,**
**IP Europe Law Dept.,**
**Kaiserleistrasse 39**
**63067 Offenbach am Main (DE)**

(56) Entgegenhaltungen:
**DE-A- 1 638 270**

• **PATENT ABSTRACTS OF JAPAN vol. 016, no. 150 (E-1189), 14.April 1992 & JP 04 004790 A (MATSUSHITA ELECTRIC IND CO LTD), 9.Januar 1992,**

**Beschreibung**

Die vorliegende Erfindung betrifft ein Verfahren zum Betrieb eines Gleichstrommotors nach dem Gattungsbegriff des Patentanspruches 1.

Es ist bekannt, daß bei Gleichstrommotoren Kollektorschlüsse auftreten können, die ihn funktionsunfähig machen.

Bei einem Gleichstrommotor wird die elektrische Energie mittels Bürsten auf den sich drehenden Kollektor übertragen. Die Reibung der Bürsten auf den Kollektorflächen erzeugt einen feinen Metallabrieb. Kollektorschlüsse entstehen sodann, wenn der Abrieb über die Spalten des Kollektors leitende Brücken bildet. Anfangs sind diese Brücken noch hochohmig, d.h. der Motor bewegt sich trotz des Kollektorschlusses mit vermindertem Drehmoment und erhöhter Stromaufnahme weiter. Mit der Zeit lagert sich an dieser Brücke weiterer Abrieb an, wodurch der Ohm'sche Widerstand sinkt bis die Ansteuerschaltung nicht mehr genügend Strom liefern kann, um den Motor anlaufen zu lassen.

Siehe als Beispiel Document DE-A-1 638 270.

Aufgabe der vorliegenden Erfindung ist es, die Ausfallwahrscheinlichkeit eines Gleichstrommotors zu verringern und somit dessen Lebensdauer zu erhöhen. Die Lösung dieser Aufgabe gelingt gemäß dem Verfahren und der Vorrichtung entsprechend den kennzeichnenden Merkmalen der unabhängigen Ansprüche. Weitere vorteilhafte Ausgestaltungen des erfindungsgemäßen Verfahrens bzw. der Vorrichtung zur Durchführung des Verfahrens sind den abhängigen Ansprüchen entnehmbar.

Anhand der beiden Figuren der anliegenden Zeichnung sei im folgenden ein Ausführungsbeispiel der Erfindung näher beschrieben. Es zeigen:

Figur 1     das Prinzipschema eines Gleichstrommotors: und

Figur 2     eine Ansteuerschaltung für den Gleichstrommotor gemäß Figur 1.

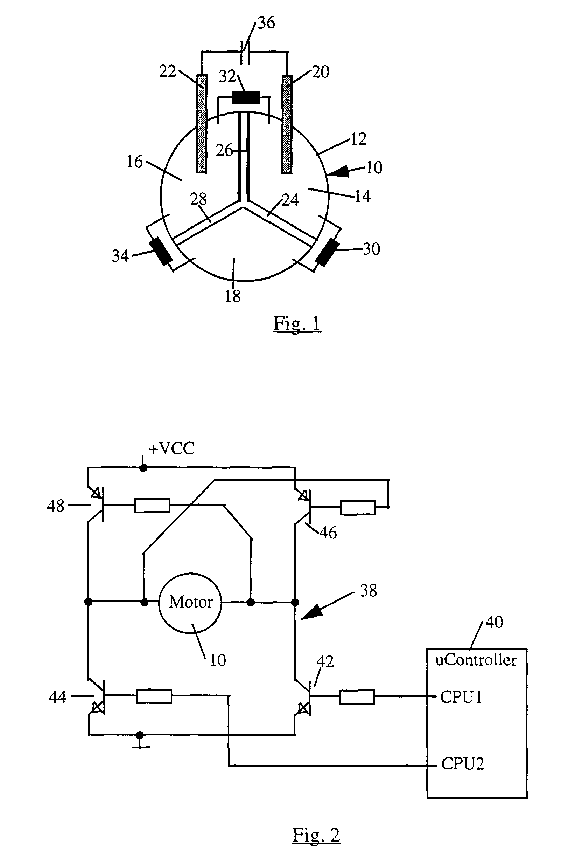

Gemäß Figur 1 ist das Prinzipschema eines Flachkollektor-Gleichstrommotors 10 dargestellt, dessen rotierendem Flachkollektor 12 mit drei über nahezu jeweils 120° verteilten Kollektorsegmenten 14, 16, 18 über zwei Bürsten 20, 22 die Gleichspannung im normalen Gleichstrombetrieb zugeführt wird. Zwischen den Kollektorsegmenten 14, 16, 18 befinden sich nicht leitende Auftrennungen, die durch Spalten 24, 26, 28 vorgegeben sind und in denen sich metallischer Abrieb festsetzen kann, der im Kurzschlußfall zum Ausfall des Motors führt. Drei Kollektorwicklungen 30, 32, 34 sind jeweils zwischen die Kollektorsegmente 14, 16, 18 geschaltet. Ferner ist ein Blockkondensator 36 in bekannter Weise zwischen den beiden Bürsten 20, 22 angeordnet.

Figur 2 zeigt eine bekannte Brücken-Ansteuerschaltung 38 für den Motor 10. Hierbei beaufschlagt ein Mikrokontroller 40 mit zwei Ausgängen CPU1 und CPU2 die Basen zweier Steuertransistoren 42, 44 vom npn-Typ innerhalb der Brückenschaltung 38. Die Emitter der Steuertransistoren 42, 44 liegen an Massepotential, und die Kollektoren dieser Transistoren sind an die Kollektoren von zwei Transistoren 46, 48 vom pnp-Typ angeschlossen, deren Emitter an einer positiven Betriebsspannung $+V_{cc}$ liegen. Die Basen der Transistoren 46, 48 sind jeweils mit den Kollektoren des Steuertransistors 44, 42 in dem anderen Zweig der Brückenschaltung verbunden. Die Ansteuerung der Basen aller Transistoren erfolgt jeweils über Widerstände. Ordnet man den an den Ausgängen CPU1 und CPU2 des Mikrokontrollers 40 ausgegebenen Signalen 0 und 1 jeweils das niedrige und hohe Potential zu, so ergibt sich folgendes Ansteuerschema für den Motor 10:

|  | CPU1 | CPU2 | Aktion |
|---|---|---|---|
| a) | 0 | 0 | Motor steht |
| b) | 0 | 1 | Motor läuft links |
| c) | 1 | 0 | Motor läuft rechts |
| d) | 1 | 1 | verbotene Ansteuerung |

Das erfindungsgemäße Verfahren wird ausgeübt, indem die Signalkombination b) und c) in schnellem Wechsel von den Ausgängen CPU1 und CPU2 an die Ansteuertransistoren 42 und 44 angelegt wird. Wählt man für den Signalwechsel eine hohe Frequenz von z. B. 40 kHz, so ergeben sich relativ hohe Scheinwiderstände für die Kollektorwicklungen 30, 32, 34 und den Blockkondensator 36, deren Werte durch wenige mH und nF vorgegeben sind. so daß der durch die Wechselspannung hervorgerufene Wechselstrom über die durch den Abrieb vorgegebenen leitenden Brücken in den Spalten 24, 26, 28 fließt und die Kollektorschlüsse zum Durchglühen bringt. Der Ausfall des Motors wird somit verhindert und seine Lebensdauer erhöht. Die Ausübung des Verfahrens erfordert keinen zusätzlichen Hardware-Aufwand, da der Mikrokontroller 40 in der Lage ist, die gewünschten Ansteuersignale neben der normalen Gleichstrom-Ansteuerung vorzugeben. Hierzu ist nur eine entsprechende Taktung der Ausgänge CPU1 und CPU2 des Mikrokontrollers 40 erforderlich.

Bei der Ausübung des Verfahrens wird der Motor zyklisch, d.h. z.B. einmal wöchentlich mit einer Wechselspannung beaufschlagt, die so hoch ist, daß

der Kollektor sich nicht drehen kann. Am Schluß zwischen den Kollektoren liegt gegenüber dem drehenden Motor etwa der dreifache Strom an, und eine Kühlung durch bewegte Luft findet nicht statt. Die entstehenden Geräusche oberhalb des Hörbereiches liegen. Die Motorspulen einen hohen Scheinwiderstand aufweisen, so daß der zur Verfügung stehende Strom voll durch den Schluß zwischen den Kollektoren fließt.

Das Verfahren kann auch dann ausgeübt werden, wenn die Software einen Fehler, z.B. den verlangsamten Lauf des Motors, erkennt.

Die Frequenz der Ansteuerung wird begrenzt durch die Sättigungszeit der Ansteuertransistoren, den Scheinwiderstand des Blockkondensators und die Hochfrequenzabstrahlung des entstehenden Signales.

Da der Ansteuerschaltung nicht bekannt ist, bei welchem Absolutwinkel der Motor steht. wird der Vorgang mehrmals wiederholt, wobei der Motor durch den normalen Gleichstrombetrieb zwischendurch verstellt wird.

In einem praktischen Ausführungsbeispiel wurde die Frequenz der Ansteuerung mit 40 KHz gewählt. Hierbei liegt der Scheinwiderstand der Spulen (3mH) bei ca. 750 Ohm. während deren Gleichstromwiderstand 133 Ohm beträgt. Der Scheinwiderstand des Blockkondensators 36 liegt noch höher, während sein Gleichstromwiderstand praktisch unendlich hoch ist.

Das erfindungsgemäße Verfahren wird mehrmals hintereinander angewendet, wobei z.B. auf 2-Sekunden-Wechsstrombetrieb, 2-Sekunden-Gleichstrom-Normalbetrieb folgt, usw.

Die vorliegende Erfindung wurde verwirklicht bei einem batteriebetriebenen elektronischen Heizkörper-Thermostaten, der zur Ventilverstellung neben einem Mikrokontroller einen Gleichstrommotor enthält und der programmierbar ist. Die für die Selbstheilung zur Verfügung zu stellende Energie beträgt bei sechs wöchentlichen Zyklen von zwei Sekunden während eines Jahres:

12 Sekunden · 52 Wochen · 10mA = 6As pro Jahr,

was 0,08% des Batterieinhaltes (Betrieb mit Mignon-Zellen) entspricht.

**Patentansprüche**

1.     Verfahren zum Betrieb eines Gleichstrommotors, dessen Kollektorwicklungen über stehende Bürsten und sich drehende Kollektoren eine Gleichspannung im Normalbetrieb zuführbar ist, **dadurch gekennzeichnet**, daß durch schnelles Umschalten der Drehrichtung der Motor in zeitlichen Abständen im Wechselstrombetrieb betrieben und mit einer Wechselspannung derart hoher Frequenz beaufschlagt wird, daß sich der Motor nicht dreht und der Strom im wesentlichen statt durch die Kollektorwicklungen über einen etwa vorhandenen metallischen Schluß zwischen den Kollektoren fließt um die Kollektorschlüße zum Durchglühen zu bringen.

2.     Verfahren nach Anspruch 1, **dadurch gekenn-**

**zeichnet**, daß der Gleichstrom-Normalbetrieb und der Wechselstrombetrieb zeitlich aufeinanderfolgen.

3.     Verfahren nach Anspruch 2, **dadurch gekennzeichnet**, daß die Umschaltung zwischen Gleichstrom-Normalbetrieb und Wechselstrombetrieb mehrfach wiederholt wird.

4.     Vorrichtung zur Durchführung des Verfahrens nach einem der Ansprüche 1 bis 3, wobei der Motor in der Diagonalen einer Brückenschaltung betrieben wird und in den Zweigen der Brückenschaltung jeweils Steuertransistoren angeordnet sind, die von einem Mikrokontroller ansteuerbar sind, **gekennzeichnet durch** eine Programmierung des Mikrokontrollers (40) derart, daß er neben antivalenten Signalen (0 und 1 bzw. 1 und 0) zur Erzeugung der Wechselspannung mit hoher Frequenz an seinen Ausgängen (CPU1, CPU2) diese Signale abwechselnd vertauscht in rascher Schrittfolge ausgibt.

5.     Vorrichtung nach Anspruch 4, **gekennzeichnet durch** die Wahl einer Frequenz der Signalvertauschung dergestalt, daß die Scheinwiderstände der Kollektorwicklungen (30, 32, 34) wesentlich höher als die zwischen den Kollektoren (14, 16, 18) gebildeten Übergangswiderstände sind.

6.     Anwendung des Verfahrens und der Vorrichtung nach einem der Ansprüche 1 bis 5. bei einem programmierbaren, batteriegespeisten elektronischen Heizkörperthermostaten, der zur Ventilverstellung neben einem Mikrokontroller einen Gleichstrommotor enthält.

**Claims**

1.     Method for operation of a DC motor, whose commutator windings can be supplied via stationary brushes and rotating commutator sections with a DC voltage during normal operation, characterized in that the motor is operated at intervals in time with alternating current by rapidly switching the rotation direction of the motor, and an AC voltage is applied to the motor whose frequency is sufficiently high that the motor does not rotate and the current essentially flows via any metallic short which may be present between the commutator sections rather than through the commutator windings, in order to cause the commutator shorts to burn through.

2.     Method according to Claim 1, characterized in that the normal DC mode and the AC mode follow one another in time.

3.     Method according to Claim 2, characterized in that the switching between the normal DC mode and the AC mode is repeated a number of times.

4. Apparatus for carrying out the method according to Claims 1 to 3, in which the motor is operated in the diagonal of a bridge circuit, and control transistors are arranged in each of the arms of the bridge circuit and can be actuated by a microcontroller, characterized by the microcontroller (40) being programmed in such a manner that, in addition to opposing signals (0 and 1 or 1 and 0) for producing the AC voltage at a high frequency at its outputs (CPU1, CPU2), it emits these signals alternately interchanged in a rapid stepping sequence.

5. Apparatus according to Claim 4, characterized by the frequency of the interchanging of the signal being selected such that the impedances of the commutator windings (30, 32, 34) are considerably greater than the contact resistances formed between the commutator sections (14, 16, 18).

6. Use of the method and of the apparatus according to one of Claims 1 to 5, in a programmable, battery-powered electronic radiator thermostat, which, in addition to a microcontroller, contains a DC motor for valve movement.

**Revendications**

1. Procédé pour le fonctionnement d'un moteur à courant continu dont les enroulements de collecteur peuvent être alimentés en tension continue en mode de fonctionnement normal, via des balais statiques et des collecteurs rotatifs, caractérisé en ce que le moteur, par inversion rapide du sens de rotation et à des intervalles de temps, fonctionne en mode courant alternatif et est alimenté en tension alternative à une haute fréquence telle que le moteur ne tourne pas et que le courant, plutôt que de circuler par les enroulements de collecteur, circule pour l'essentiel via un court-circuit métallique présent par exemple entre les collecteurs, afin de porter à incandescence les courts-circuits aux collecteurs.

2. Procédé selon la revendication 1, caractérisé en ce que le mode de fonctionnement normal en courant continu et le mode de fonctionnement en courant alternatif se succèdent dans le temps.

3. Procédé suivant la revendication 2, caractérisé en ce que la commutation entre le mode de fonctionnement normal en courant continu et le mode de fonctionnement en courant alternatif est répétée plusieurs fois.

4. Dispositif de mise en oeuvre du procédé suivant l'une des revendications 1 à 3, le moteur fonctionnant dans la diagonale d'un montage en pont et des transistors de commande qui peuvent être commandés par un microcontrôleur, étant disposés dans chacune des branches du montage en pont, dispositif caractérisé en ce que le microcontrôleur (40) est programmé de telle façon qu'il émette en outre des signaux antivalents (0 et 1 ou selon le cas 1 et 0) pour produire la tension alternative à haute fréquence au niveau de ses sorties (CPU1, CPU2), ces signaux intervertis en alternance, en une séquence rapide.

5. Dispositif suivant la revendication 4, caractérisé par le choix d'une fréquence d'interversion des signaux faisant en sorte que les impédances des enroulements de collecteur (30, 32, 34) soient bien supérieures aux résistances de passage formées entre les collecteurs (14, 16, 18).

6. Application du procédé et du dispositif suivant une des revendications 1 à 5 dans le cas d'un thermostat de radiateur, électronique, programmable et fonctionnant sur piles, comportant, pour le réglage de vanne, outre un microcontrôleur, un moteur à courant continu.

Fig. 1

Fig. 2